# EUROPEAN PATENT APPLICATION

(11) **EP 2 081 279 A1**
(43) Date of publication of application: **22.07.2009**
(21) Application number: 07831229.5
(22) Date of filing: 05.11.2007
(51) Int. Cl.: H02K 3/52, H01R 39/00, H02K 5/22

(54) **ELECTRIC MOTOR, ELECTRIC PUMP UNIT EQUIPPED WITH THE ELECTRIC MOTOR, AND BUS BAR TERMINAL STRUCTURE**

(30) Priority: 06.11.2006 JP 2006300489
(71) Applicant: JTEKT Corporation, Osaka-shi Osaka 542-8502 (JP)
(72) Inventor: SAKATA, Takatoshi, Osaka-shi Osaka 5428502 (JP)
(74) Representative: Görz, Ingo
(86) International application number: PCT/JP2007/071497
(87) International publication number: WO 2008/056633

(57) **Abstract**

An electric motor is provided which includes a tubular insulator for insulating a stator core and coils and a busbar fixed to the insulator and electrically connected to the coils, wherein busbar terminals having a slit-shaped portion which is opened at one end thereof for engagement of an end portion of the coil are formed integrally on the busbar. The busbar terminals are disposed with their opening directions aligned along the same circular arc.

## Description

### Technical Field

The present invention relates to an electric motor including a busbar which includes busbar terminals electrically connected to end portions of coils, an electric pump unit including the same, and a busbar terminal structure which are made up of the busbar terminals.

### Background Art

There have conventionally been known brushless motors (electric motors) which include a stator core around which coils are wound via an insulator (refer to JP-A-2005-229703). In such brushless motors, as is shown in Fig. 5, there is a brushless motor which includes a busbar 216 (a main body portion is embedded in an insulator 214) which is fixed to the insulator 214 for electrically connecting coils 213 which are wound around tooth portions 214a with a motor control circuit board.

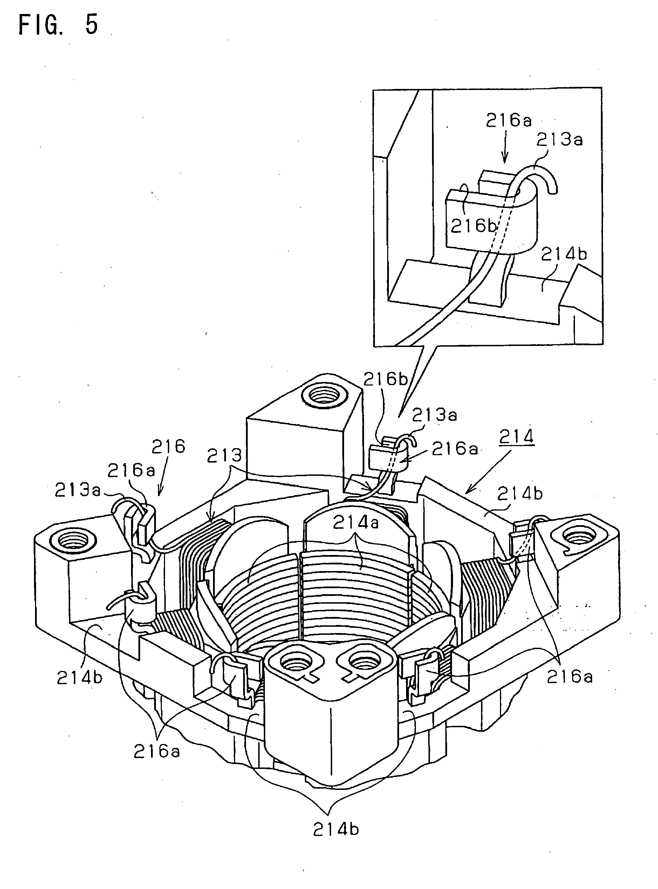

Referring to an upper enlarged view in Fig. 5, a plurality of busbar terminals 216a are formed on the busbar 216 which have a slit-shaped portion 216b (a bent-back shape portion) which is opened at one end thereof. In addition, end portions 213a (conductor portions) of the coils 213 are brought into engagement with the busbar terminals 216a, and those engagement portions are resistance welded through fusing (a method in which end portions of conductors are brought into engagement with bent-back shape terminals and thereafter, the engagement portions are pressed for press contact by a fusing machine).

### Disclosure of the Invention

### Problem that the invention is to Solve

In the conventional brushless motor described above, however, the busbar terminals 216a were arranged on a circumferential edge end face of the insulator 214 in such a manner that the slit-shaped portions 216b were not aligned in a predetermined direction but were arranged at random. Because of this, when resistance welding the engagement portions between the busbar terminals 216a and the end portions 213a of the coils 213 by the use of a fusing machine (a resistance welding machine), a welding electrode of the fusing machine needs to moved not only in a front-rear direction (a Z direction), but also in vertical and left-right directions (X-Y directions) or to be rotated relative to the engagement portions. Due to this, the moving actions of the fusing machine became complex, and this reduced the productivity of electric motors and required the fusing machine including the mechanism used to enable such movements, which was expensive.

The invention has been made with a view to solving the problems, and an object thereof is to provide an electric motor in which a welding operation of welding engagement portions between busbar terminals and end portions of coils through fusing is simplified and hence, superior productivity is provided and a busbar terminal structure which realizes the simplification of the welding operation of welding the engagement portions between the busbar terminals and the end portions of the coils through fusing.

### Means for solving the Problem

With a view to solving the problems, a first aspect of the invention provides an electric motor comprising a stator core, coils, a tubular insulator for insulating the stator core and the coils, and a busbar fixed to the insulator and electrically connected to the coils, in which a plurality of busbar terminals having a slit-shaped portion which is opened at one end thereof for engagement of an end portion of the coil, and in which the busbar terminals are disposed with their opening directions aligned along the same circular arc.

According to the above configuration, since the busbar terminals fixed to the insulator are disposed with their opening directions aligned along the same circular arc, when resistance welding the engagement portions between the busbar terminals and the end portions of the coils by the use of the fusing machine (the resistance welding machine), the welding operation can be implemented only by rotating the work (the insulator) about a center point of the circular arc and moving the welding electrode of the fusing machine in the front-rear direction (the Z direction) relative to the engagement portions.

A second aspect of the invention provides the electric motor of the first invention in which the insulator is formed into a polygonal tubular shape having surfaces which are parallel to strip portions which form the slit-shaped portions of the busbar terminals, and the busbar is fixed to the insulator in such a state that the busbar terminals are caused to project, and moreover, the busbar terminals are disposed on a circumferential edge end face of the insulator along their corresponding parallel surfaces.

According to the above configuration, in such a state that the busbar is fixed to the insulator and thereafter, the plate materials are caused to extend along the parallel surfaces, the busbar terminals which correspond to the parallel surfaces can be bend perpendicular to the end face of the insulator by the use of the plate materials. By this, the bending operation can be implemented simply and accurately.

A third aspect of the invention provides a busbar terminal structure comprising a busbar fixed to a tubular insulator which insulates a stator core and coils and electrically connected to the coils, and a plurality of busbar terminals formed on the busbar and having slit-shaped portions which are opened at one ends for engagement of end portions of the coils, wherein the busbar terminals are disposed with their opening directions aligned along the same circular arc.

According to the above configuration, since the busbar terminals are disposed with their opening directions of the slit-shaped portions aligned along the same circular arc, when resistance welding the engagement portions between the busbar terminals and the end portions of the coils by the use of a fusing machine, the welding operation can be implemented only by rotating the work (the insulator) about a center point of the circular arc and moving the welding electrode of the fusing machine in the front-rear direction (the Z direction) relative to the engagement portions.

### Advantage of the Invention

According to the invention, the resistance welding of the engagement portions between the busbar terminals and the end portions of the coils through fusing can be simplified, so as t.o obtain the electric motor which has superior productivity.

### Brief Description of the Drawings

Fig. 1A is an axial sectional view showing a main part of an electric pump unit according to an embodiment of the invention, and Fig. 1B is an end view of an insulator portion (including a stator core, coils and busbars) according to the same embodiment.
Fig. 2 is a perspective view showing the structure of the insulator portion (including the busbars) according the embodiment of the invention.
Fig. 3 is a wiring diagram showing a wiring system of the coils according to the embodiment of the invention.
Fi.g. 4 is a function diagram showing a bending operation of a busbar terminal according to the embodiment of the invention.
Fig. 5 is a perspective view showing a partial structure of an insulator portion (including a stator core, busbars and coils) according to a related art example.

### Best Mode for Carrying out the Invention

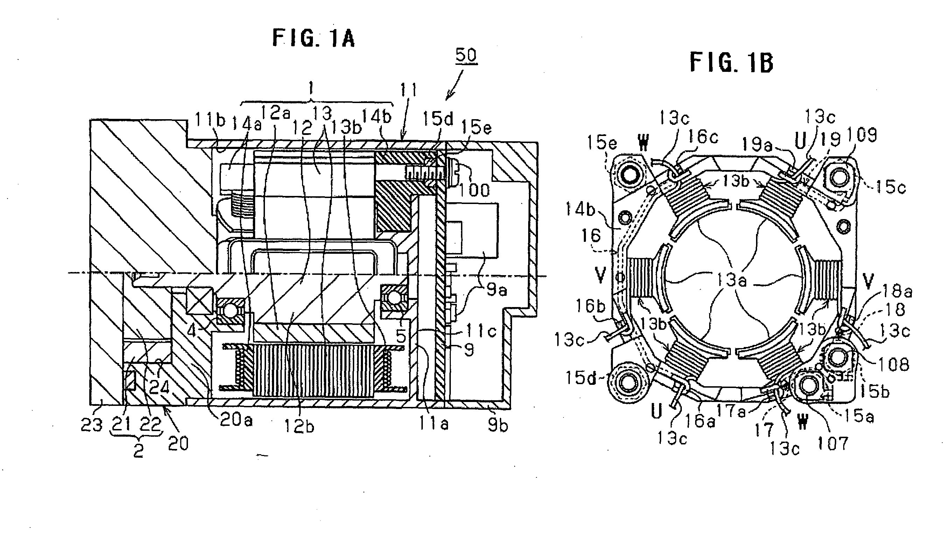

Hereinafter, an embodiment for carrying out the invention will be described in accordance with the drawings.
As is shown in Fig. 1, an electric motor 1 of this embodiment is such as to be used in an electric pump unit 50 which is used as an automotive transmission hydraulic pump.

Referring to Figs. 1A and 1B, the electric motor includes a rotor 12, a stator core 13 which surrounds the rotor 12, and coils 13b which are wound around six (a plurality of) tooth portions 13a of the stator core 13. Further, the electric motor 1 includes a pair of insulators 14a, 14b which is fitted on the stator core 13 from both axial ends thereof so as to isolate the coils 13b from the stator core 13 (the tooth portions 13a) and is accommodated a bottomed quadrangular tube-shaped motor case 11. In addition, referring to Fig. 1B, the electric motor 1 shown in the above figures configures a three-phase brushless motor and three pairs of confronting coils 13b, 13b configure a U-phase, a V-phase and a W-phase, respectively. In addition, in the embodiment, the insulators 14a, 14b are each formed from a PPS (polyphenyl sulfide) resin (an insulation material) through injection molding.

Referring to Fig. 1A, the electric pump unit 50 includes a pump part 2 for sucking and discharging a fluid, and the pump part 2 and the electric motor 1 is formed into a unit. To describe this in detail, the pump part 2 configures a so-called trochoidal pump and has an outer rotor 21 and an inner rotor 22 which is made to mesh with the outer rotor 21 so as to rotate. In addition, this pump part 2 is formed into a bottomed quadrangular tubular shape and is accommodated in a pump compartment 24 which is made up of a pump case 20 which is fixed to the motor case 11 in such a manner as to communicate therewith and a lid portion 23 which closes an open end portion of the pump case 20. Further, a pump part 2 side end portion of the rotor 12 supports the inner rotor 22 rotatably.

A tubular magnet 12a is fixedly provided around an outer circumference of the rotor 12. In addition, this magnet 12a is supported movably by a large diameter portion 12b of the rotor 12. In addition, the rotor 12 is supported rotatably on the pump case 20 and the motor case 11 via a first rolling bearing 4 which is provided at a central portion of a bottom portion 20a of the pump case 20 and a second rolling bearing 5 which is provide at a central portion of a bottom portion 11a of the motor case 11.

Referring to Fig. 1A, in the electric pump unit 50 of this embodiment, a control circuit board 9 for controlling the electric motor 1 is attached to the motor case 11 from an outer end face 11c side of the motor case 11. The control circuit board 9 is accommodated fluid-tightly in a controller accommodating portion 9b together with electronic components 9a such as coils, capacitors and the like.

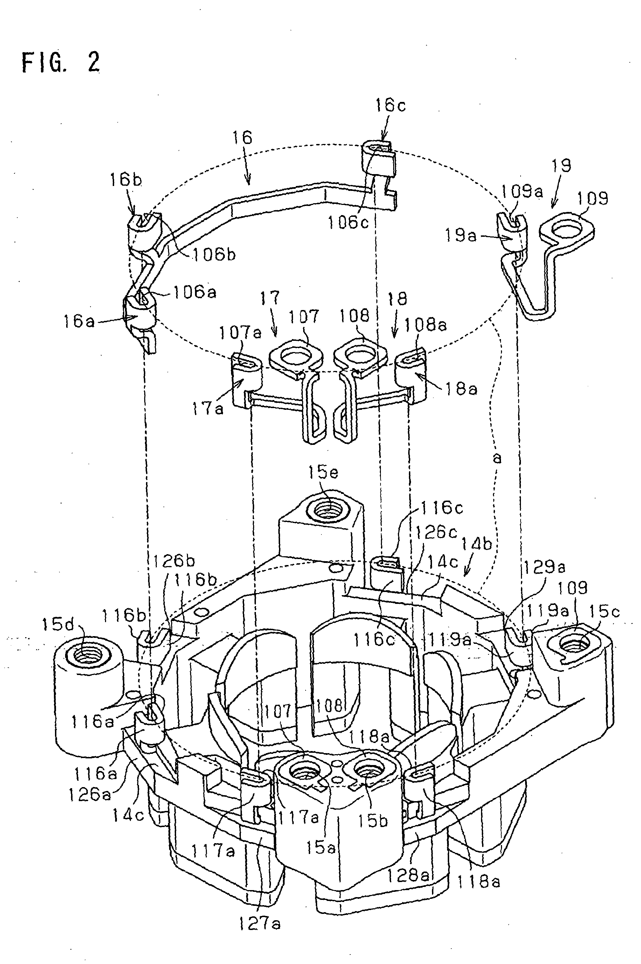

As is shown in Fig. 1B and Fig. 2, five (a plurality of) nuts 15a, 15b, 15c, 15d, 15e are embedded in the insulator 14b which lies on the control circuit board 9 side (a right-hand side as viewed in Fig. 1) through insert molding. Further, busbars 16, 17, 18, 19 are embedded in the insulator 14b through insert molding for electrically connecting the coils 13b together or the coils 13b with the control circuit board 9. Here, the busbars 16 to 19 are each such that an elongated metallic plate material (a copper plate material plated with tin) is formed into a predetermined shape from a flat plate state by bending or the like.

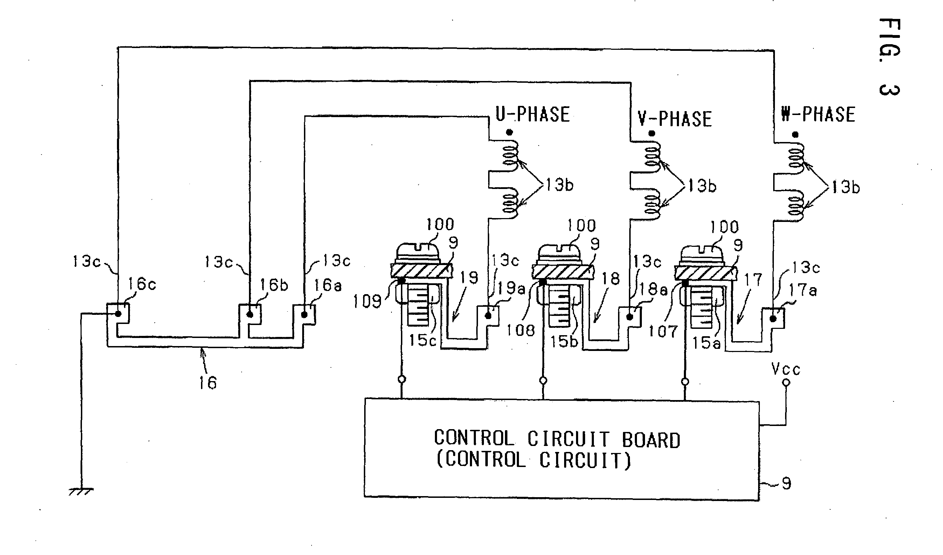

As is shown in Figs. 2 and 3, the busbar 16 is such as to function as a common electrode on an earth side of the respective U-phase, V-phase and W-phase which are formed by the plurality of coils 13b and is formed into a bow shape and longest. Three busbar terminals 16a, 16b, 16c having slit-shaped portions 106a, 106b, 106c (bent-back shape portions) which are each opened at one end thereof are formed integrally on the busbar 16. In addition, the terminals 16a, 16b, 16c are connected to end portions 13c of ones of the pairs of coils 13b, 13b which configure the U-phase, V-phase and W-phase, respectively. Additionally, busbar terminals 17a, 18a, 19a are formed integrally on the busbars 17 to 19, respectively, which busbar terminals 17a, 18a, 19a are formed into the same shape as the busbar terminals 16a, 16b, 16c and have slit-shaped portions 107a, 108a, 109a which are each opened at one end thereof. In addition, the busbar terminals 17a, 18a, 19a re connected to end portions 13c of the others of the pairs of coils 13b. To describe this in detail, the end portions 13c of the coils 13b are brought into engagement with the slit-shaped portions (whose reference numerals are omitted) of the busbar terminals 16a to 16c, 17a to 19a (refer to Fig. 1B). In addition, the busbar terminals 16a to 16c, 17a to 19a shown in Fig. 2 are disposed on a circumferential edge end face 14c of the insulator 14b in such a manner as to be vertical to the end face 14c (in an erected state).

Referring to Figs. 1 to 3, in this embodiment, a plurality of screws 100 are inserted into the control circuit board 9 and are threaded into the nuts 15a to 15e, whereby the control circuit board 9 is fixed to the insulator 14b, so that the busbars 17 to 19 and the control circuit board 9 are electrically connected to each other. In addition, by this configuration, a drive current which is controlled by a control circuit provided on the control circuit board 9 is made to be supplied to the pairs of coils 13b, 13b which configure the U-, V- and W-phase via the corresponding busbars 17 to 19. Specifically, ring-shaped portions 107, 108, 109 are formed integrally on the busbars 17 to 19, respectively, and by the control circuit board 9, the ring-shaped portions 107, 108, 109 and the nuts 15a to 15c being fixed together in such a state that they are brought into surface contact with each other by the screws 100 which are inserted thereinto, the coils 13b and the control circuit board 9 are made to be electrically connected to each other.

Referring to Fig. 2, the electric motor 1 of the embodiment is **characterized in that** the busbar terminals 16a to 16c, 17a to 19a are disposed in such a manner that opening directions are aligned along the same circular arc a shown by a broken line. In other words, the electric motor 1 is **characterized in that** the busbar terminals 16a to 16c, 17a to 19a are disposed on the circular arc a shown by the broken line and that longitudinal directions of pairs of strip portions 116a, 116a to 116c, 116c, 117a, 117a to 119a, 119a which form the slit-shaped portions 106a to 106c, 107a to 109a, respectively, are aligned along a circumferential direction of the circular arc a. In addition, in the busbars 16 to 19 shown in Fig. 2, the slit-shaped portions 106a to 106c, 107a of the busbar terminals 16a to 16c, 17a are opened in a rightward rotational direction of the circular arc a, and the slit-shaped portions 108a, 109 of the other busbar terminals 18a, 19a are opened in a leftward rotational direction of the circular arc a.

In addition, referring to Fig. 2, in the electric motor 1 of the embodiment, the insulator 14b is formed into a polygonal tubular shape having surfaces 126a to 126c, 127a to 129a which are parallel to the strip portions (whose reference numerals are omitted) of the busbar terminals 16a to 16c, 17a to 19a, and the busbar terminals 16a to 16c, 17a to 19a are disposed on the circumferential edge end face 14c of the insulator 14b in such a manner as to be aligned along the corresponding parallel surfaces 126a to 126c, 127a to 129a.

The electric motor 1 of the embodiment is configured as has been described heretofore and provides the following function and advantage.
(1) The busbar terminals 16a to 16c, 17a to 19a which are fixed to the insulator 14b and which have the slit-shaped portions 106a to 106c, 107a to 109a which are each opened at the one end thereof are disposed in such a manner that the opening directions of their slit-shaped portions are aligned along the same circular arc a (refer to Fig. 2). Because of this, when resistance welding the engagement portions between the busbar terminals (whose reference numerals are omitted) and the end portions of the pairs of coils 13b, 13b by the use of a fusing machine, the welding operation can be implemented only by rotating the work (the insulator) about the center point of the circular arc a and moving a welding electrode of the fusing machine in a front-rear direction (a Z direction) relative to the engagement portions. To describe this in detail, a clamp portion is provided at a distal end portion of the welding electrode which clamp portion holds the pair of strip portions (whose reference numerals are omitted) of each busbar terminal at the time of welding so as to impart a holding pressure to thereby press the strip portions together with the end portion of the coil 13b for press contact. Then, a resistance welding is implemented in such a state that the engagement portion is held by the clamp portion. As a result, the welding operation of welding the engagement portions between the busbar terminals (whose reference numerals are omitted) and the end portions of the pairs of coils 13b, 13b can be simplified, thereby making it possible to obtain the electric motor 1 which has superior productivity.

(2) The insulator 14b is formed into the polygonal tubular shape having the surfaces (the parallel surfaces 126a to 126c, 127a to 129a) which are parallel to the strip portions 116a, 116a to 116c, 116c, 117a, 117a to 119a, 119a which form the slit-shaped portions 106a to 106c, 107a to 109a of the busbar terminals 16a to 16c, 17a to 19a, and the busbars 16 to 19 are fixed to the insulator 14b in such a state that the busbar terminals 16a to 16c, 17a to 19a are caused to project. Moreover, the busbar terminals 16a to 16c, 17a to 19a are disposed on the circumferential edge end face 14c of the insulator 14b in such a manner as to be aligned along their corresponding parallel surfaces 126a to 126c, 127a to 129a, respectively.

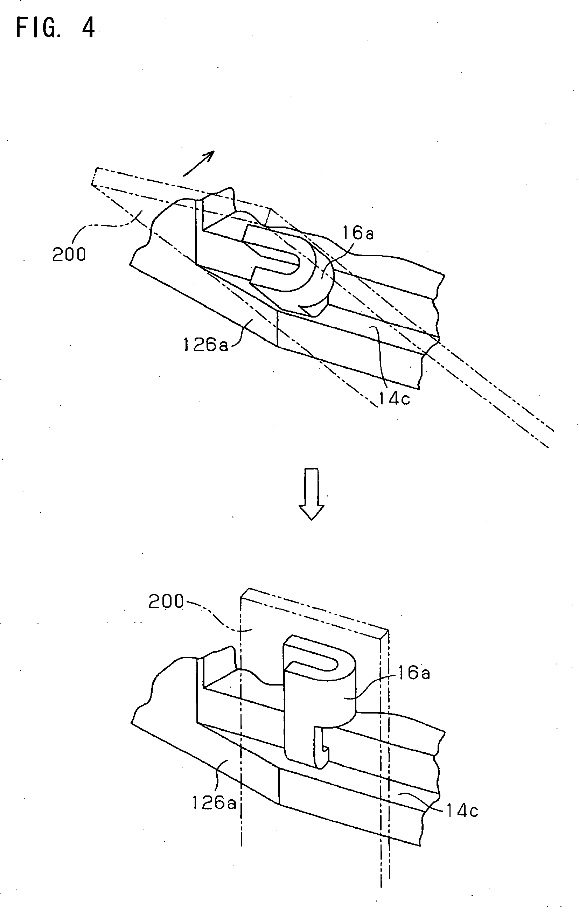

By this configuration, as is shown in Fig. 4, a main body portion of the busbar 16 (refer to Fig. 2) is molded in (fixed to) the insulator 14b through injection molding, and thereafter, the insulator terminal 16a which corresponds to the parallel surface 126a can be bent in such a manner as to become vertical relative to the circumferential edge end face 14c of the insulator 14b by the use of a plate material 200 shown by an imaginary line in such a state that the busbar terminal 16a is made to follow the plate material 200. This enables the bending operation to be implemented simply and accurately. In addition, the embodiment that has been described heretofore may be modified in the following manner.

- In the embodiment, in the busbars 16 to 19, the slit-shaped portions 106a to 106c, 107a of the busbar terminals 16a to 16c, 17a are configured to be opened in the rightward rotational direction of the circular arc a, and the slit-shaped portions 108a, 109a of the other busbar terminals 18a, 19a are configured to be opened in the leftward rotational direction of the circular arc a. However, the invention is not limited thereto, and hence, all the slit-shaped portions may be opened in the same rotational direction, and in addition to the pattern shown in Fig. 2, part of the slit-shaped portions may be opened in a different direction from a direction in which the other slit-shaped portions are opened.

## Claims

1. An electric motor comprising:
a stator core;
coils;
a tubular insulator for insulating the stator core and the coils; and
a busbar fixed to the insulator and electrically connected to the coils,
wherein a plurality of busbar terminals including a slit-shaped portion which is opened at one end thereof for engagement of an end portion of the coil are formed on the busbar, and
wherein the busbar terminals are disposed so that the opening directions of the busbar terminals are aligned along the same circular arc.

2. The electric motor according to claim 1, wherein the insulator is formed into a polygonal tubular shape having surfaces which are parallel to strip portions which form the slit-shaped portions of the busbar terminals, and the busbar is fixed to the insulator in such a state that the busbar terminals are caused to project, and the busbar terminals are disposed on a circumferential edge end face of the insulator along the corresponding parallel surfaces, respectively.

3. A busbar terminal structure comprising:
a busbar which is fixed to a tubular insulator for insulating a stator core and coils and which is electrically connected to the coils; and
a plurality of busbar terminals which are formed on the busbar and include slit-shaped portions which are opened at one ends for engagement of end portions of the coils,
wherein the busbar terminals are disposed so that opening directions of the busbar terminals are aligned along the same circular arc.

4. An electric pump unit comprising:
a pump part for sucking and discharging a fluid; and
the electric motor according to claim 1 for driving the pump part.
